# EUROPEAN PATENT APPLICATION

(11) **EP 2 574 972 A1**
(43) Date of publication of application: **03.04.2013**
(21) Application number: 11824552.1
(22) Date of filing: 02.09.2011
(51) Int. Cl.: G02B 26/08, H04J 14/02, H04J 14/08

(54) **AN OPTICAL SWITCH METHOD AND AN OPTICAL SWITCH**

(30) Priority: 15.09.2010 CN 201010282150
(71) Applicant: Huawei Technologies Co., Ltd., Shenzhen, Guangdong 518129 (CN)
(72) Inventor: FU, Zhenghua, Shenzhen Guangdong 518129 (CN)
(74) Representative: Kreuz, Georg Maria
(86) International application number: PCT/CN2011/079290
(87) International publication number: WO 2012/034482

(57) **Abstract**

Embodiments of the present invention provide a method for an optical switch and an optical switch. The optical switch includes a light turning unit, configured to turn a plurality of light beams, where the light turning unit includes a plurality of MEMs grating beams, the plurality of light beams falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path.

## Description

### FIELD OF THE INVENTION

The present invention relates to the field of optical communication technologies, and in particular, to a method for an optical switch and an optical switch.

### BACKGROUND OF THE INVENTION

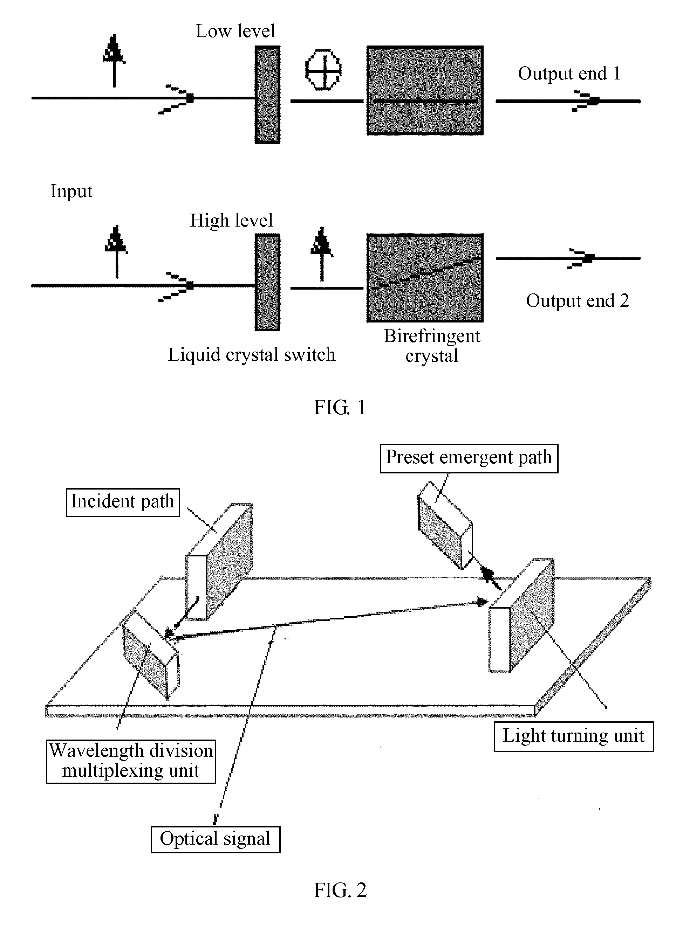

As optical transmission capacity continuously increases, the complexity of path switching and networking for optical communication becomes increasingly higher, and in order to meet networking requirements, increasingly higher requirements are imposed on intelligent wavelength switching in WDM (Wavelength Division Multiplexing, wavelength division multiplexing) transmission nodes, and an optical switch having a wavelength selection function is developed accordingly. An existing wavelength selective cross connect optical switch is shown in FIG. 1.

The optical switch adjusts and controls a light transmission direction by using electro-optical properties of liquid crystals to change phase and polarization properties of transmitted light.

In the implementation of the present invention, the inventor finds that the prior art at least has the following disadvantages:

One liquid crystal cell is fabricated into one 1X2 switch, and if expansion and upgrading are required, and many ports need to be switched, the number of liquid crystal cells needed is increased correspondingly, which greatly increases the structural complexity.

### SUMMARY OF THE INVENTION

Embodiments of the present invention provide a method for an optical switch and an optical switch, which may achieve expansion and upgrading through a simple structure.

An embodiment of the present invention provides a method for an optical switch, which adopts the following technical solution:
inputting, by at least one incident path, an optical signal in the form of a light beam, where the optical signal is a multi-wavelength optical signal or a single-wavelength optical signal;
splitting, according to wavelengths, the optical signal input by the at least one incident path, to group the optical signal of the same wavelength into one light beam, where a plurality of light beams is formed after the splitting; and
forming a plurality of light spots by the plurality of light beams that is after the splitting and falls on a plurality of MEMs grating beams, where one light spot falls on at least two MEMs grating beams, and one grating beam bears a part of one light spot, and rotating at least two MEMs grating beams in the plurality of MEMs grating beams in turn in batches, to reflect at least a part of a light spot to at least one preset emergent path.

In some embodiments of the present invention, the method may further include: reflecting at least a part of a light spot to the outside of the incident path and the preset emergent path.

Corresponding to the method, an embodiment of the present invention further provides an optical switch, which includes:
a light turning unit, configured to turn a plurality of light beams, where the light turning unit includes a plurality of MEMs grating beams, the plurality of light beams falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path; and
the preset emergent path, configured to output at least the part of the light spot reflected thereto.

Corresponding to the method, an embodiment of the present invention further provides a wavelength selective optical switch combination, which includes:
at least one incident path, where the incident path inputs an optical signal in the form of a light beam, and the optical signal is a multi-wavelength optical signal or a single-wavelength optical signal;
a wavelength division multiplexing unit, configured to split, according to wavelengths, the optical signal input by the at least one incident path, so as to group the optical signal of the same wavelength into one light beam, which is incident to a light turning unit, where a plurality of light beams is formed after the splitting; and
the light turning unit, configured to turn the plurality of light beams incident from the wavelength division multiplexing unit; where the light turning unit includes a plurality of MEMs grating beams, the plurality of light beams incident from the wavelength division multiplexing unit falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path.

Corresponding to the method, an embodiment of the present invention further provides a communication device, which includes:
a wavelength selective optical switch combination and a drive control unit, where the drive control unit is configured to drive rotation of MEMs grating beams; and
the wavelength selective optical switch combination includes:
   at least one incident path, where the incident path inputs an optical signal in the form of a light beam, and the optical signal is a multi-wavelength optical signal or a single-wavelength optical signal;
   a wavelength division multiplexing unit, configured to split, according to wavelengths, the optical signal input by the at least one incident path, so as to group the optical signal of the same wavelength into one light beam, which is incident to a light turning unit, where a plurality of light beams is formed after the splitting; and
   the light turning unit, configured to turn the plurality of light beams incident from the wavelength division multiplexing unit; where the light turning unit includes a plurality of MEMs grating beams, the plurality of light beams incident from the wavelength division multiplexing unit falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path.

In some embodiments of the present invention, the grating beams in the light turning unit may further be rotated in turn in batches, to reflect at least a part of a light spot to the outside of the incident path and the preset emergent path.

The embodiments of the present invention are used for optical switching communication, and optical switching is achieved by using timed one-dimensional rotation of MEMs grating beams. The plurality of MEMs grating beams bearing the plurality of light spots is rotated in at least two batches, to reflect at least a part of a light spot to at least one preset emergent path (which may also be referred to as a target emergent path), so that optical path switching may be achieved simply and conveniently. If it is intended to achieve switching of more paths, it only needs to use the plurality of grating beams to turn at least a part of the light spot to more angles respectively, and after a reflection angle is changed, the optical signal is reflected to different preset emergent paths, so that path expansion and upgrading may be achieved conveniently, that is, the number of preset emergent paths may be increased as long as a reflection angle range is widened. The solutions in the embodiments of the present invention may perform switching of more paths conveniently, thereby achieving upgrading.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are some embodiments of the present invention, and persons skilled in the art may derive other drawings from the accompanying drawings without creative efforts.

FIG. 1 is a schematic diagram of an existing optical switch;

FIG. 2 is a schematic diagram of a wavelength selective optical switch combination according to an embodiment of the present invention;

FIG. 3 is a schematic diagram of grating beams in a wavelength selective optical switch combination according to an embodiment of the present invention;

FIG. 4 is a partial schematic diagram of grating beams in a wavelength selective optical switch combination according to an embodiment of the present invention;

FIG. 5 is a schematic diagram of rotation of grating beams in a wavelength selective optical switch combination according to an embodiment of the present invention;

FIG. 6 is a schematic diagram of rotation of grating beams to a monitoring unit in a wavelength selective optical switch combination according to an embodiment of the present invention;

FIG. 7 is a schematic diagram of a part of grating beams being fixed in a wavelength selective optical switch combination according to an embodiment of the present invention;

FIG. 8 is a schematic diagram of a monitoring unit in a wavelength selective optical switch combination according to an embodiment of the present invention;

FIG. 9 is a schematic diagram of an incident path in a wavelength selective optical switch combination according to an embodiment of the present invention;

FIG. 10 is a schematic diagram of another incident path in a wavelength selective optical switch combination according to an embodiment of the present invention;

FIG. 11 is a schematic diagram of a wavelength selective optical switch combination according to an embodiment of the present invention;

FIG. 12 is a schematic diagram of still another incident path in a wavelength selective optical switch combination according to an embodiment of the present invention;

FIG. 13 is a schematic diagram of an emergent path in a wavelength selective optical switch combination according to an embodiment of the present invention;

FIG. 14 is a schematic diagram of another emergent path in a wavelength selective optical switch combination according to an embodiment of the present invention;

FIG. 15 is a schematic diagram of still another emergent path in a wavelength selective optical switch combination according to an embodiment of the present invention;

FIG. 16 is a schematic diagram of integration of a part of components in an incident path and an emergent path that are in a wavelength selective optical switch combination according to an embodiment of the present invention;

FIG. 17 is a schematic diagram of a wavelength selective optical switch according to an embodiment of the present invention; and

FIG. 18 is a schematic diagram of a method for an optical switch according to an embodiment of the present invention.

### DETAILED DESCRIPTION OF THE EMBODIMENTS

The present invention aims to provide embodiments of a light turning method and an optical switch, which may achieve expansion and upgrading through a simple structure.

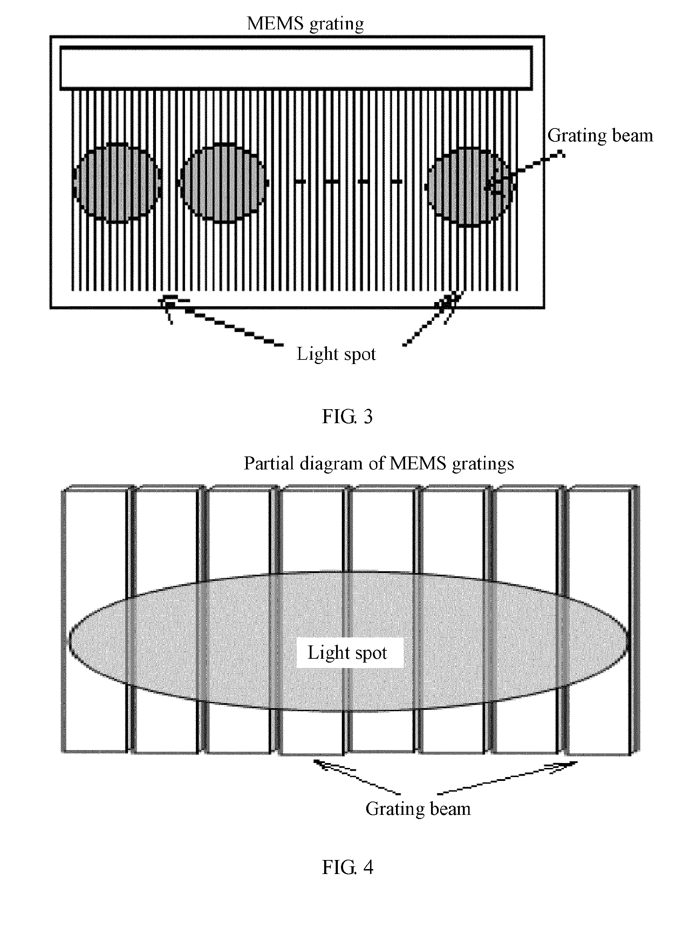

As shown in FIG. 2 to FIG. 4, the present invention provides a wavelength selective optical switch combination, which includes:
at least one incident path, where the incident path inputs an optical signal in the form of a light beam, and the optical signal is a multi-wavelength optical signal or a single-wavelength optical signal;
a wavelength division multiplexing unit, configured to split, according to wavelengths, the optical signal input by the at least one incident path, so as to group the optical signal of the same wavelength into one light beam, which is incident to a light turning unit, where a plurality of light beams is formed after the splitting, and the plurality of light beams includes a light beam including parallel light, or the plurality of light beams includes a light beam including diverging light, or the plurality of light beams includes a light beam including parallel light and a light beam including diverging light;
the light turning unit, configured to turn the plurality of light beams incident from the wavelength division multiplexing unit; where the light turning unit includes a plurality of MEMs (Micro Electromechanical System, micro electromechanical system) grating beams, the plurality of light beams incident from the wavelength division multiplexing unit falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path; and
the preset emergent path, configured to output at least the part of the light spot reflected thereto.

The preset emergent path refers to an emergent path to which at least a part of a light spot is intended to be reflected.

The embodiment of the present invention is used for optical switching communication, and optical switching is achieved by using timed one-dimensional rotation of MEMs grating beams. The plurality of MEMs grating beams bearing the plurality of light spots is rotated in at least two batches, to reflect at least a part of a light spot to at least one preset emergent path (which may also be referred to as a target emergent path), so that optical path switching may be achieved simply and conveniently. If it is intended to achieve switching of more paths, it only needs to use the plurality of grating beams to turn at least a part of the light spot to more angles respectively, and after the reflection angle is changed, the optical signal is reflected to different preset emergent paths, so that path expansion and upgrading may be achieved conveniently, that is, the number of preset emergent paths may be increased as long as the reflection angle range is widened. The solution in the embodiment of the present invention may perform switching of more paths conveniently, thereby achieving upgrading.

Further, in the embodiment of the present invention, optical signal switching is achieved through one-dimensional rotation of MEMS grating beams, which has low manufacturing requirements on the wavelength selective optical switch combination, and is easy to implement; and because the MEMS grating beam has a small volume, the optical signal switching also has advantages of small volume and high integration.

Further, in the embodiment of the present invention, the light spot is borne by a plurality of MEMs grating beams, so that when a problem occurs to a single beam, no destructive effect occurs to the system, thereby ensuring reliability. The more the MEMs grating beams for bearing a single light spot are, the higher the reliability is.

In the embodiment of the present invention, the "rotating at least two MEMs grating beams in the plurality of MEMs grating beams in turn in batches, to reflect at least a part of a light spot to at least one preset emergent path" includes: dividing at least two MEMs grating beams in the plurality of MEMs grating beams bearing the plurality of light spots into at least two batches, and rotating the two batches in turn, to reflect at least one complete light spot or at least one partial light spot, or at least one complete light spot and at least one partial light spot, to at least one preset emergent path. In a case where two or more preset emergent paths exist, the light spot reflected to one preset emergent path may include at least one complete light spot, or at least one partial light spot, or at least one complete light spot and at least one partial light spot. In other words, because different light spots have different wavelengths, the complete or partial light spot reflected to the preset emergent path may include a complete or partial light spot of one wavelength, or complete or partial light spots of multiple wavelengths.

In the case where the light spot reflected to the preset emergent path includes complete or partial light spots of multiple wavelengths, the preset emergent path is specifically configured to combine the complete or partial light spots of multiple wavelengths reflected thereto into a multi-wavelength optical signal for output.

In the "rotating at least two MEMs grating beams in the plurality of MEMs grating beams in turn in batches, to reflect at least a part of a light spot to at least one preset emergent path", among the MEMs grating beams bearing the plurality of light spots, at least one MEMs grating beam rotated in each batch includes: at least one grating beam bearing at least one complete light spot or at least one partial light spot, or at least one grating beam bearing at least one complete light spot and at least one partial light spot.

In the embodiment of the present invention, in a case where two or more incident paths exist, optical signals input by the incident paths may have different wavelengths. If one incident path inputs a multi-wavelength optical signal, all wavelengths in the multi-wavelength optical signal are different from the wavelengths of optical signals in other incident paths.

In the embodiment of the present invention, the number of the incident path may be multiple, and the number of the preset emergent path may also be multiple, in other words, in the embodiment of the present invention, optical signals in a plurality of incident paths may be turned to a plurality of other preset emergent paths. In addition, in the embodiment of the present invention, the number of the incident path may be not equal to the number of the preset emergent path, for example, the number of the incident path is one, while the number of the preset emergent path is multiple; or the numbers of the incident path and the preset emergent path are multiple, but are not equal.

Here, a specific example may be given:

An optical signal having multiple wavelengths (for example, wavelengths λ1, λ2 and λ3) is input from one incident path, an optical signal having one wavelength (for example, wavelength λ4) is input from another incident path, and after passing through the light turning unit, the optical signal having the wavelength of λ1 and the optical signal having the wavelength of λ2 enter one preset emergent path, and the optical signal having the wavelength of λ3 and the optical signal having the wavelength of λ4 enter another preset emergent path.

In the embodiment of the present invention, the plurality of MEMs grating beams may be a comb structure. A working width of the MEMs grating beam may be smaller than a diameter of the light spot. In the plurality of MEMs grating beams, each MEMs grating beam may have a different working width.

In the embodiment of the present invention, one light spot falls on a plurality of MEMs grating beams, and at least two MEMs grating beams in the MEMs grating beams bearing the plurality of light spots are rotated in turn in batches, where one batch of MEMs grating beams to be rotated may be started to rotate after a previous batch of MEMs grating beams is rotated to a desired position and stopped, or may be started to rotate before the previous batch of MEMs grating beams is rotated to the desired position, as long as the two batches of grating beams being rotated do not sweep the light spot to the same emergent path at the same time. In this way, the light spot borne on the grating beam rotated each time may sweep across optical paths other than the preset emergent path (target emergent path). The light spot borne on the grating beam rotated each time may be a part of the plurality of light spots or even a certain part of one light spot, bears small energy, and therefore has low crosstalk with other optical paths.

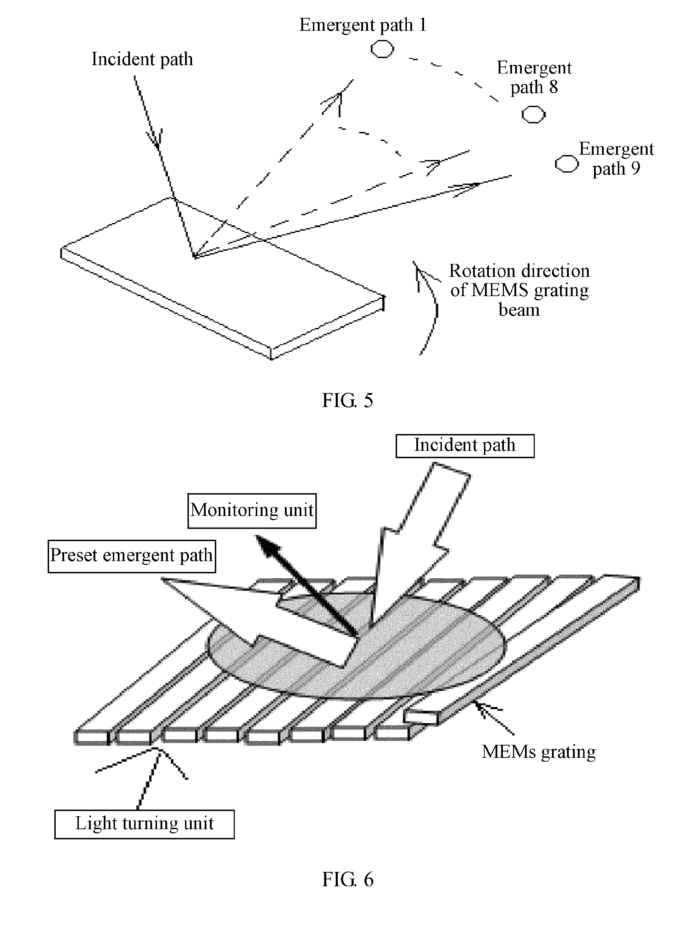

Still further, in the embodiment of the present invention, one light spot falls on a plurality of MEMs grating beams, and crosstalk with other optical paths than the target emergent path during turning may be controlled by controlling energy of the light spot borne on the grating beam rotated each time. For example, the energy of the light spot borne on the grating beam rotated each time is 1% of total energy of a certain incident path, and when the grating beam is rotated, from an emergent path 9 to an emergent path 1, multiple non-target emergent paths such as emergent paths 8 and 7 are swept over, and finally the emergent path 1 (referring to FIG. 5) is reached, where the emergent path 1 is a preset emergent path, that is, target emergent path. In this way, at each time point, at most 1% of the optical energy crosstalks with the non-target emergent paths such as emergent paths 8 and 7. The lower the energy of the light spot borne on the grating beam rotated each time is, the lower the crosstalk with the non-target emergent paths is.

In the embodiment of the present invention, the light turning unit is specifically configured to turn the plurality of light beams incident from the wavelength division multiplexing unit, where the light turning unit includes a plurality of MEMs (Micro Electromechanical System, micro electromechanical system) grating beams, the plurality of light beams incident from the wavelength division multiplexing unit falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path, and to reflect at least a part of a light spot to the outside of "the incident path and the at least one preset emergent path".

Here, it should be noted that, "at least one MEMs grating beam in the MEMs grating beams bearing the plurality of light spots" may be maintained at a fixed angle, to reflect at least a part of a light spot to the outside of "the incident path and the at least one preset emergent path".

In the embodiment of the present invention, the "at least one preset emergent path" may be a part or all of a plurality of emergent paths. The "outside of the incident path and the at least one preset emergent path" may include positions that are not on the emergent path and the incident path, and light attenuation is achieved by reflecting a part of the light spot to the outside of the emergent path and the incident path. For example, the light spot of a certain wavelength that has excessive energy is attenuated, so that the energy of light spots having different wavelengths may be averaged.

Further, because one light spot falls on a plurality of MEMs grating beams, the larger the number of MEMs grating beams for bearing the light spot is, the more diverse the energy (or referred to as power) of a parallel light spot is. In this way, the degree of attenuation may be accurately controlled by turning a certain MEMs grating beam or some MEMs grating beams.

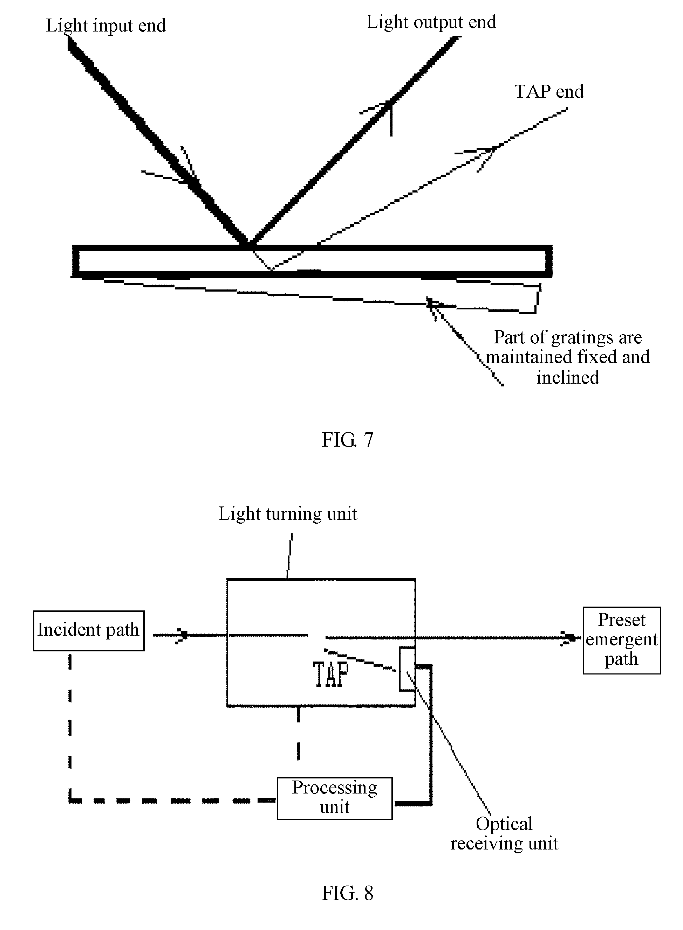

As shown in FIG. 6 and FIG. 7, in the embodiment of the present invention, outside "the incident path and the at least one preset emergent path", a monitoring unit may be further included.

The monitoring unit may be located on an emergent path other than the at least one preset emergent path, or the monitoring unit may be located on a position outside the incident path and the emergent path.

The monitoring unit is configured to obtain optical power of the light spot according to at least the part of the light spot reflected thereto, and adjust, according to the optical power of the light spot, energy of the optical signal in the incident path or energy of the light spot reflected to "the outside of the incident path and the at least one preset emergent path", so that energy of light reflected to and transmitted in the at least one preset emergent path is normal.

That "the energy of light transmitted in the at least one preset emergent path is normal" refers to that, during optical signal transmission, the energy is not high enough to damage the emergent path, or the energy is not small enough to cause that a destination end cannot receive the optical signal when the optical signal reaches the destination end.

As shown in FIG. 7, here, it should be noted that, "at least one MEMs grating beam in the MEMs grating beams bearing the plurality of light spots" may be maintained at a fixed angle, to reflect at least a part of a light spot to the monitoring unit.

As shown in FIG. 8, the monitoring unit may include an optical receiving unit and a processing unit.

The optical receiving unit is configured to receive at least a part of a light spot reflected thereto, and perform photoelectric conversion on "at least the part of the light spot" to convert "at least the part of the light spot" to an electrical signal.

The optical receiving unit may include an optical collimator and a photoelectric conversion unit.

The optical collimator is configured to receive an optical signal.

The photoelectric conversion unit is configured to convert the optical signal to an electrical signal, and provide the electrical signal to the processing unit for processing.

The photoelectric conversion unit may be a PD (photodiode Photo-Diode).

The processing unit is configured to output a control command to a signal source of the optical signal in the incident path or to the light turning unit according to the electrical signal, where the control command is configured to adjust the signal source of the optical signal in the incident path, or the degree of attenuation performed by the light turning unit on the optical signal, so that the energy of the optical signal transmitted in the preset emergent path is normal.

The processing unit is specifically configured to: according to optical energy fed back by the electrical signal and a ratio of the energy of the light spot reflected to the optical receiving unit to the energy of the light spot reflected to the preset emergent path, calculate the energy of the optical signal transmitted in the preset emergent path, and feed back a control command to the signal source of the optical signal in the incident path, where the control command is configured to adjust the energy of the signal source of the optical signal in the incident path; or, feed back a control command to the light turning unit, where the control command is configured to adjust the degree of attenuation performed by the light turning unit on the optical signal, so that the energy of the optical signal transmitted in the preset emergent path is normal.

In the embodiment of the present invention, at least a part of a light spot is reflected to the monitoring unit to implement TAP (partial) splitting, so as to implement the monitoring on the energy of the optical signal transmitted in the preset emergent path, which is simple and convenient to implement. In addition, the optical receiving unit of the monitoring unit may also be integrated on the light turning unit, so as to improve the integration of the system.

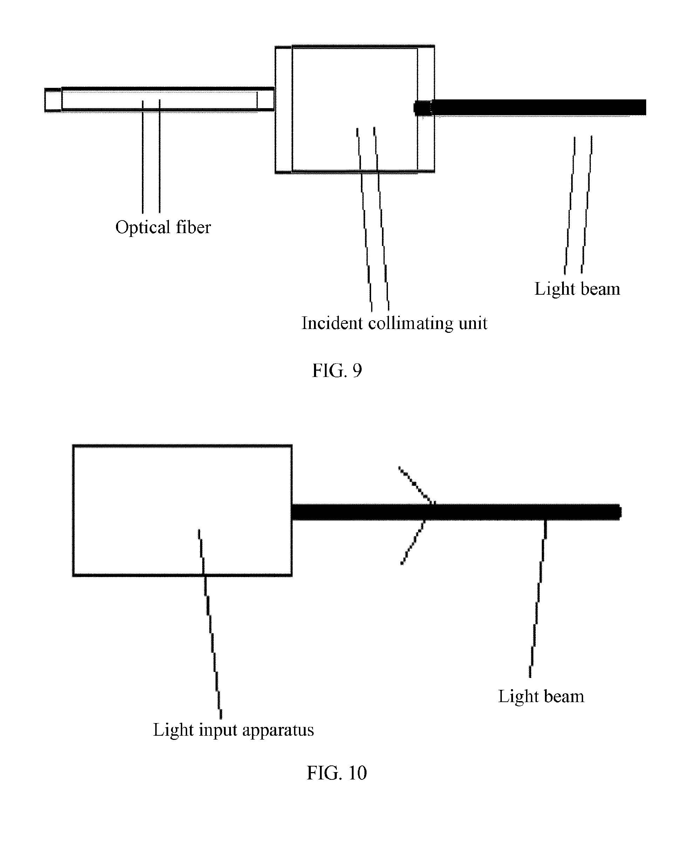

Referring to FIG. 9, in the embodiment of the present invention, the incident path may include:
an optical fiber, configured to input an optical signal in the form of a point light source, where the optical signal is a multi-wavelength optical signal or a single-wavelength optical signal; and
an incident collimating unit, configured to amplify the optical signal in the form of the point light source into a light beam, where the light beam may be a light beam including parallel light or a light beam including diverging light.

Alternatively, as shown in FIG. 10, the incident path may include:
a light input apparatus, configured to input an optical signal in the form of a light beam, where the optical signal is a multi-wavelength optical signal or a single-wavelength optical signal, and the light beam may be a light beam including parallel light or a light beam including diverging light.

The incident collimating unit may be an optical collimator or an optical collimating lens; and the incident collimating unit may include at least one set of lenses and reflectors.

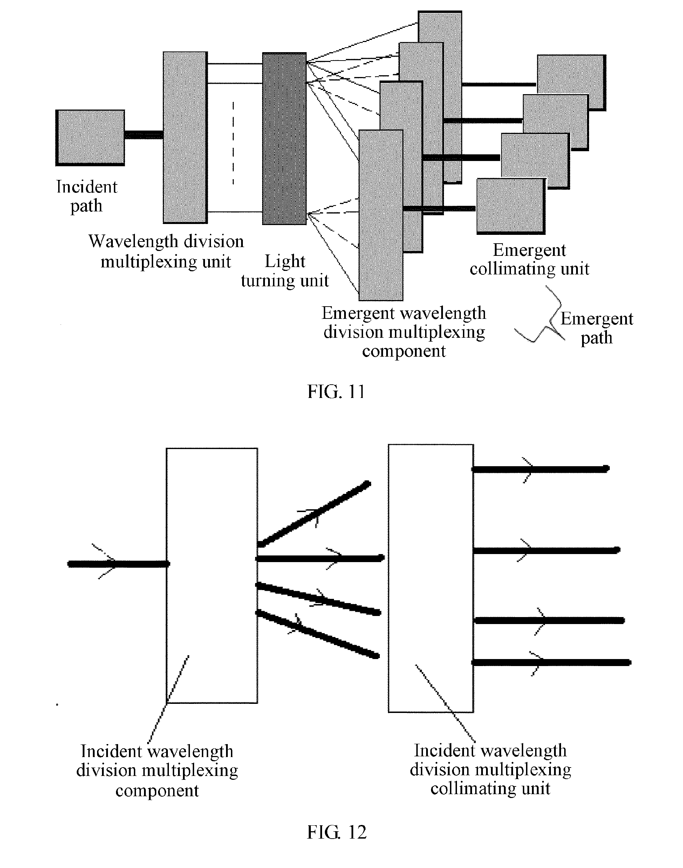

As shown in FIG. 11 and FIG. 12, in the embodiment of the present invention, the wavelength division multiplexing unit may include:
an incident wavelength division multiplexing component, configured to split, according to wavelengths, the optical signal input by the at least one incident path, so as to group the optical signal of the same wavelength into one light beam, which is incident to the light turning unit, where a plurality of light beams is formed after the splitting, and the plurality of light beams includes a light beam including parallel light, or the plurality of light beams includes a light beam including diverging light, or the plurality of light beams includes a light beam including parallel light and a light beam including diverging light. The plurality of light beams may be distributed divergently. The plurality of light beams may be located in the same plane.

Referring to FIG. 12, in the embodiment of the present invention, the wavelength division multiplexing unit may further include:
an incident wavelength division multiplexing collimating unit, configured to focus the plurality of light beams, so that the distribution of the plurality of light beams changes from a divergent distribution to a parallel distribution.

The incident wavelength division multiplexing collimating unit may be an optical collimator or an optical collimating lens; and the incident wavelength division multiplexing collimating unit may include at least one set of lenses and reflectors.

The incident wavelength division multiplexing component may include a crystal grating or waveguide grating.

In a case where the light beams emergent from the wavelength division multiplexing unit are distributed divergently, a plurality of MEMs gratings in the light turning unit may be arranged on a cambered surface, so that the direction of the plurality of light beams distributed divergently is substantially perpendicular to the surface of the MEMs grating.

In a case where the light beams emergent from the wavelength division multiplexing unit are distributed in parallel, a plurality of MEMs gratings in the light turning unit may be arranged on a plane surface, so that the direction of the plurality of light beams distributed in parallel is substantially perpendicular to the surface of the MEMs grating.

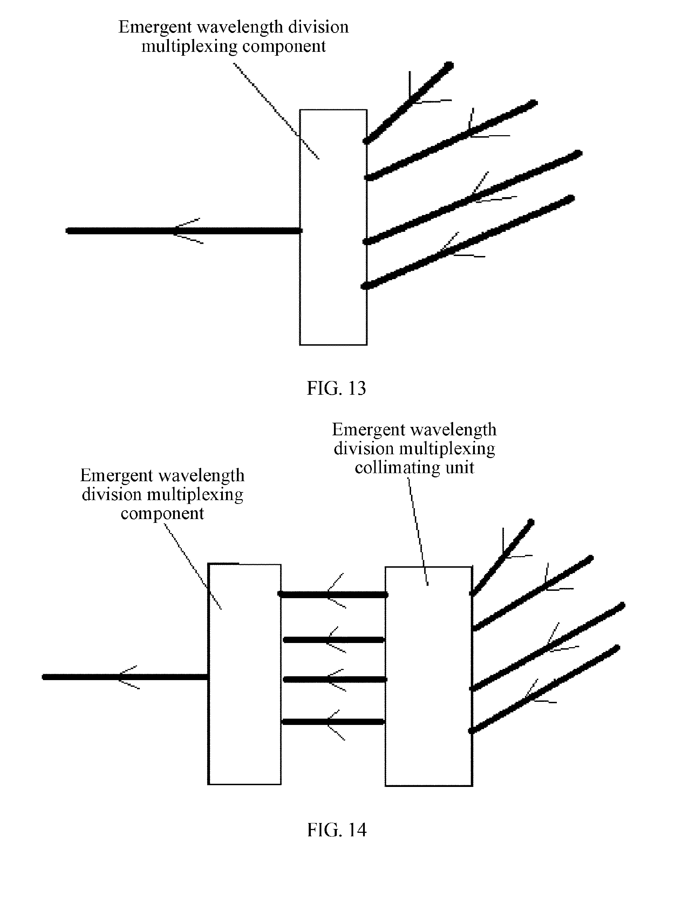

Referring to FIG. 11 and FIG. 13, in the embodiment of the present invention, the emergent path may include:
an emergent wavelength division multiplexing component, configured to combine at least two light beams formed by at least the part of the light spot reflected thereto into one light beam, where the light beam is a light beam including parallel light or a light beam including diverging light. The at least two light beams may be light beams that are from different light spots and have different wavelengths, or may be light beams that are from the same light spot and have the same wavelength.

The emergent wavelength division multiplexing component may include a crystal grating or waveguide grating.

As shown in FIG. 14, in the embodiment of the present invention, the emergent path may further include:
an emergent wavelength division multiplexing collimating unit, configured to focus at least two light beams formed by "at least the part of the light spot" reflected thereto, so that the distribution of the at least two light beams changes from a divergent distribution to a parallel distribution. In this way, the at least two light beams incident to the emergent wavelength division multiplexing component are distributed in parallel; definitely, the at least two light beams incident to the emergent wavelength division multiplexing component may also be distributed divergently, that is, the emergent wavelength division multiplexing collimating unit may not need to be disposed.

The emergent wavelength division multiplexing collimating unit may be an optical collimator or an optical collimating lens; and the emergent wavelength division multiplexing collimating unit may include at least one set of lenses and reflectors.

Here, it should be noted that, if at least the part of the light spot reflected to the preset emergent path forms one light beam, the emergent wavelength division multiplexing component does not need to be disposed, and the emergent wavelength division multiplexing collimating unit may also not need to be disposed.

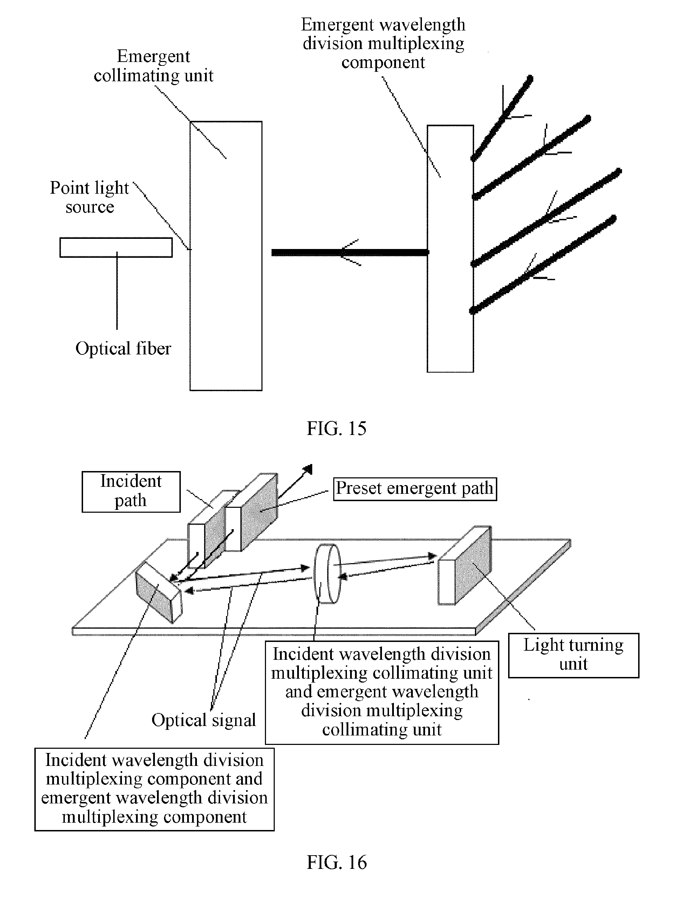

As shown in FIG. 11 and FIG. 15, in the embodiment of the present invention, the emergent path may further include:
an emergent collimating unit, configured to focus a light beam into a point light source.
   The point light source may be output through an optical fiber.

A light beam processed by the emergent collimating unit may be a light beam combined by the emergent wavelength division multiplexing component, or may be a light beam formed by "at least the part of the light spot" reflected to the emergent path.

The emergent collimating unit may be an optical collimator or an optical collimating lens; and the emergent collimating unit may include at least one set of lenses and reflectors.

As shown in FIG. 16, in the embodiment of the present invention,
the incident collimating unit and the emergent collimating unit may be integrated;
the incident wavelength division multiplexing component and the emergent wavelength division multiplexing component may be integrated; and
the incident wavelength division multiplexing collimating unit and the emergent wavelength division multiplexing collimating unit may be integrated.

In a case where "the incident wavelength division multiplexing component" and "the emergent wavelength division multiplexing component" are integrated, in the "splitting, according to wavelengths, the optical signal input by the at least one incident path, so as to group the optical signal of the same wavelength into one light beam, which is incident to a light turning unit, where a plurality of light beams is formed after the splitting", the plurality of light beams may be located in a plane A. The "at least two light beams" in the "combining at least two light beams formed by at least the part of the light spot reflected thereto into one light beam" are located in a plane B, and the plane A and the plane B may be substantially parallel to each other.

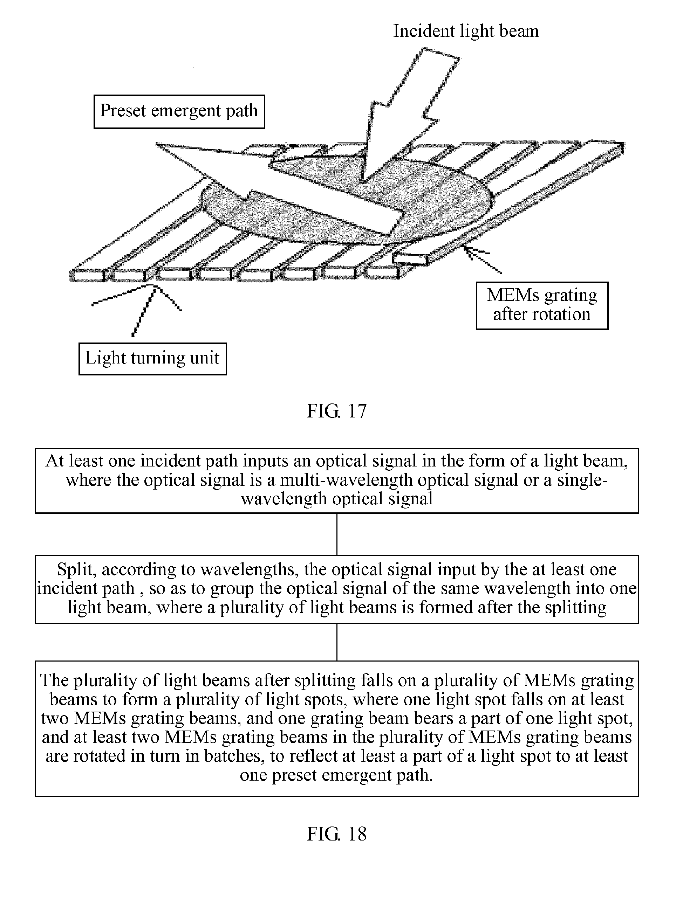

As shown in FIG. 17, the present invention provides an optical switch, which includes:
a light turning unit, configured to turn a plurality of light beams, where the light turning unit includes a plurality of MEMs grating beams, the plurality of light beams falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path; and
the preset emergent path, configured to output at least the part of the light spot reflected thereto.

For various implementations of the light turning unit and the preset emergent path, reference is made to the foregoing embodiments.

The embodiment of the present invention is used for optical switching communication, and optical switching is achieved by using timed one-dimensional rotation of MEMs grating beams. The plurality of MEMs grating beams bearing the plurality of light spots is rotated in at least two batches, to reflect at least a part of a light spot to at least one preset emergent path (which may also be referred to as a target emergent path), so that optical path switching may be achieved simply and conveniently. If it is intended to achieve switching of more paths, it only needs to use the plurality of grating beams to turn at least a part of the light spot to more angles respectively, and after the reflection angle is changed, the optical signal is reflected to different preset emergent paths, so that path expansion and upgrading may be achieved conveniently, that is, the number of preset emergent paths may be increased as long as the reflection angle range is widened. The solution in the embodiment of the present invention may perform switching of more paths conveniently, thereby achieving upgrading.

Further, in the embodiment of the present invention, optical signal switching is achieved through one-dimensional rotation of MEMS grating beams, which has low manufacturing requirements on the wavelength selective optical switch combination, and is easy to implement; and because the MEMS grating beam has a small volume, the optical signal switching also has advantages of small volume and high integration.

Further, in the embodiment of the present invention, the light spot is borne by a plurality of MEMs grating beams, so that when a problem occurs to a single beam, no destructive effect occurs to the system, thereby ensuring reliability. The more the MEMs grating beams for bearing a single light spot are, the higher the reliability is.

The present invention further provides an embodiment of a communication device, where the communication device includes the wavelength selective optical switch combination described in the foregoing embodiment, and a drive control unit, configured to drive rotation of the MEMs grating beams.

The communication device may be an OXC (Optical Cross Connect) optical cross connect network device, and the optical cross connect network device may include an optical communication transmission path cross connect node of equipment or an optical communication add/drop cross connect device.

As shown in FIG. 18, the present invention further provides a method for an optical switch, which includes:
inputting, by at least one incident path, an optical signal in the form of a light beam, where the optical signal is a multi-wavelength optical signal or a single-wavelength optical signal;
splitting, according to wavelengths, the optical signal input by the at least one incident path, so as to group the optical signal of the same wavelength into one light beam, where a plurality of light beams is formed after the splitting, and the plurality of light beams includes a light beam including parallel light, or the plurality of light beams includes a light beam including diverging light, or the plurality of light beams includes a light beam including parallel light and a light beam including diverging light; and
forming a plurality of light spots by the plurality of light beams that is after the splitting and falls on a plurality of MEMs grating beams, where one light spot falls on at least two MEMs grating beams, and one grating beam bears a part of one light spot, and rotating at least two MEMs grating beams in the plurality of MEMs grating beams in turn in batches, to reflect at least a part of a light spot to at least one preset emergent path.

The preset emergent path refers to an emergent path to which at least a part of a light spot is intended to be reflected.

The embodiment of the present invention is used for optical switching communication, and optical switching is achieved by using timed one-dimensional rotation of MEMs grating beams. The plurality of MEMs grating beams bearing the plurality of light spots is rotated in at least two batches, to reflect at least a part of a light spot to at least one preset emergent path (which may also be referred to as a target emergent path), so that optical path switching may be achieved simply and conveniently. If it is intended to achieve switching of more paths, it only needs to use the plurality of grating beams to turn at least a part of the light spot to more angles respectively, and after the reflection angle is changed, the optical signal is reflected to different preset emergent paths, so that path expansion and upgrading may be achieved conveniently, that is, the number of preset emergent paths may be increased as long as the reflection angle range is widened. The solution in the embodiment of the present invention may perform switching of more paths conveniently, thereby achieving upgrading.

Further, in the embodiment of the present invention, optical signal switching is achieved through one-dimensional rotation of MEMS grating beams, which has low manufacturing requirements on the wavelength selective optical switch combination, and is easy to implement; and because the MEMS grating beam has a small volume, the optical signal switching also has advantages of small volume and high integration.

Further, in the embodiment of the present invention, the light spot is borne by a plurality of MEMs grating beams, so that when a problem occurs to a single beam, no destructive effect occurs to the system, thereby ensuring reliability. The more the MEMs grating beams for bearing a single light spot are, the higher the reliability is.

In the embodiment of the present invention, the "rotating at least two MEMs grating beams in the plurality of MEMs grating beams in turn in batches, to reflect at least a part of a light spot to at least one preset emergent path" includes: dividing at least two MEMs grating beams in the plurality of MEMs grating beams bearing the plurality of light spots into at least two batches, and rotating the two batches in turn, to reflect at least one complete light spot or at least one partial light spot, or at least one complete light spot and at least one partial light spot, to at least one preset emergent path. In a case where two or more preset emergent paths exist, the light spot reflected to one preset emergent path may include at least one complete light spot or at least one partial light spot, or at least one complete light spot and at least one partial light spot. In other words, because different light spots have different wavelengths, the complete or partial light spot reflected to the preset emergent path may include a complete or partial light spot of one wavelength, or may also include complete or partial light spots of multiple wavelengths.

In the case where the light spot reflected to the preset emergent path includes complete or partial light spots of multiple wavelengths, the preset emergent path is specifically configured to combine the complete or partial light spots of multiple wavelengths reflected thereto into a multi-wavelength optical signal for output.

In the "rotating at least two MEMs grating beams in the plurality of MEMs grating beams in turn in batches, to reflect at least a part of a light spot to at least one preset emergent path", among the MEMs grating beams bearing the plurality of light spots, at least one MEMs grating beam rotated in each batch includes: at least one grating beam bearing at least one complete light spot or at least one partial light spot, or at least one grating beam bearing at least one complete light spot and at least one partial light spot.

In the embodiment of the present invention, in a case where two or more incident paths exist, optical signals input by the incident paths may have different wavelengths. If one incident path inputs a multi-wavelength optical signal, all wavelengths in the multi-wavelength optical signal are different from the wavelengths of optical signals in other incident paths.

In the embodiment of the present invention, the number of the incident path may be multiple, and the number of the preset emergent path may also be multiple, in other words, in the embodiment of the present invention, optical signals in a plurality of incident paths may be turned to a plurality of additional preset emergent paths. In addition, in the embodiment of the present invention, the number of the incident path may be not equal to the number of the preset emergent path, for example, the number of the incident path is one, while the number of the preset emergent path is multiple; or the numbers of the incident path and the preset emergent path are multiple, but are not equal.

Here, a specific example may be given:

An optical signal having multiple wavelengths (for example, wavelengths λ1, λ2 and λ3) is input from one incident path, an optical signal having one wavelength (for example, wavelength λ4) is input from another incident path, and after passing through the light turning unit, the optical signal having the wavelength of λ1 and the optical signal having the wavelength of λ2 enter one preset emergent path, and the optical signal having the wavelength of λ3 and the optical signal having the wavelength of λ4 enter another preset emergent path.

In the embodiment of the present invention, the plurality of MEMs grating beams may be a comb structure. A working width of the MEMs grating beam may be smaller than a diameter of the light spot. In the plurality of MEMs grating beams, each MEMs grating beam may have a different working width.

In the embodiment of the present invention, one light spot falls on a plurality of MEMs grating beams, and at least two MEMs grating beams in the MEMs grating beams bearing the plurality of light spots are rotated in turn in batches, where one batch of MEMs grating beams to be rotated may be started to rotate after a previous batch of MEMs grating beams is rotated to a desired position and stopped, or may be started to rotate before the previous batch of MEMs grating beams is rotated to the desired position, as long as the two batches of grating beams being rotated do not sweep the light spot across the same emergent path at the same time.

In this way, the light spot borne on the grating beam rotated each time may sweep across optical paths other than the preset emergent path (target emergent path), and the light spot borne on the grating beam rotated each time may be a part of the plurality of light spots or even a certain part of one light spot, which bears small energy, and therefore has low crosstalk with other optical paths.

Still further, in the embodiment of the present invention, one light spot falls on a plurality of MEMs grating beams, and crosstalk with other optical paths than the target emergent path during turning may be controlled by controlling energy of the light spot borne on the grating beam rotated each time. For example, the energy of the light spot borne on the grating beam rotated each time is 1% of total energy of a certain incident path, and when the grating beam is rotated, from an emergent path 9 to an emergent path 1, multiple non-target emergent paths such as emergent paths 8 and 7 are swept over, and finally the emergent path 1 (referring to FIG. 5) is reached, where the emergent path 1 is a preset emergent path, that is, target emergent path. In this way, at each time point, at most 1% of the optical energy crosstalks with the non-target emergent paths such as emergent paths 8 and 7. The lower the energy of the light spot borne on the grating beam rotated each time is, the lower the crosstalk with the non-target emergent paths is.

In the embodiment of the present invention, the plurality of light beams after splitting falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path, and to reflect at least a part of a light spot to the outside of "the incident path and the at least one preset emergent path".

Here, it should be noted that, "at least one MEMs grating beam in the MEMs grating beams bearing the plurality of light spots" may be maintained at a fixed angle, to reflect at least a part of a light spot to the outside of "the incident path and the at least one preset emergent path".

In the embodiment of the present invention, the "at least one preset emergent path" may be a part or all of a plurality of emergent paths. The "outside of the incident path and the at least one preset emergent path" may include positions that are not on the emergent path and the incident path, and light attenuation is achieved by reflecting a part of the light spot to the outside of the emergent path and the incident path. For example, the light spot of a certain wavelength that has excessive energy is attenuated, so that the energy of light spots having different wavelengths may be averaged.

Further, because one light spot falls on a plurality of MEMs grating beams, the larger the number of MEMs grating beams for bearing the light spot is, the more disperse the energy (or referred to as power) of the parallel light spot is. In this way, the degree of attenuation may be accurately controlled by turning a certain MEMs grating beam or some MEMs grating beams.

Persons skilled in the art should understand that, all or a part of processes in the method according to the embodiments may be accomplished by relevant hardware under instructions of a computer program. The program may be stored in a computer-readable storage medium. When the program is executed, the process of the method according to the embodiments is performed. The storage medium may be a magnetic disk, an optical disk, a Read-Only Memory (Read-Only Memory, ROM), a Random Access Memory (Random Access Memory, RAM), or the like.

The above is the specific implementation of the present invention, but the protection scope of the present invention is not limited thereto. Any change or replacement that may be easily thought of by persons skilled in the art within the technical scope disclosed by the present invention shall fall within the protection scope of the present invention. Therefore, the protection scope of the present invention shall be subject to the protection scope of the claims.

## Claims

1. An optical switch, comprising:
a light turning unit, configured to turn a plurality of light beams, wherein the light turning unit comprises a plurality of MEMs grating beams, the plurality of light beams falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path; and
the preset emergent path, configured to output at least the part of the light spot reflected thereto.

2. The wavelength selective optical switch combination according to claim 1, wherein the plurality of MEMs grating beams is a comb structure.

3. The wavelength selective optical switch according to claim 1, wherein a working width of each of the MEMs grating beams is smaller than a diameter of the light spot.

4. The wavelength selective optical switch according to claim 1, wherein in the plurality of MEMs grating beams, each MEMs grating beam has a different working width.

5. A wavelength selective optical switch combination, comprising:
at least one incident path, wherein the incident path inputs an optical signal in a form of a light beam, and the optical signal is a multi-wavelength optical signal or a single-wavelength optical signal;
a wavelength division multiplexing unit, configured to split, according to wavelengths, an optical signal input by the at least one incident path, so as to group the optical signal of a same wavelength into one light beam, which is incident to a light turning unit, wherein a plurality of light beams is formed after splitting; and
the light turning unit, configured to turn the plurality of light beams incident from the wavelength division multiplexing unit, wherein the light turning unit comprises a plurality of MEMs grating beams, the plurality of light beams incident from the wavelength division multiplexing unit falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path; and
the preset emergent path, configured to output at least the part of the light spot reflected thereto.

6. The wavelength selective optical switch combination according to claim 5, wherein in a case where two or more incident paths exist, optical signals input by the incident paths have different wavelengths.

7. The wavelength selective optical switch combination according to claim 5, wherein the plurality of MEMs grating beams is a comb structure.

8. The wavelength selective optical switch combination according to claim 5, wherein a working width of the MEMs grating beam is smaller than a diameter of the light spot.

9. The wavelength selective optical switch combination according to claim 5, wherein in the plurality of MEMs grating beams, each MEMs grating beam has a different working width.

10. The wavelength selective optical switch combination according to claim 5, wherein the light turning unit is specifically configured to turn the plurality of light beams incident from the wavelength division multiplexing unit, wherein the light turning unit comprises a plurality of MEMs grating beams, the plurality of light beams incident from the wavelength division multiplexing unit falls on the plurality of MEMs grating beams to form a plurality of light spots, one light spot falls on at least two MEMs grating beams, one grating beam bears a part of one light spot, and at least two MEMs grating beams in the plurality of MEMs grating beams are rotated in turn in batches, to reflect at least a part of a light spot to at least one preset emergent path, and to reflect at least a part of a light spot to the outside of "the incident path and the at least one preset emergent path".

11. The wavelength selective optical switch combination according to claim 5, wherein at least one MEMs grating beam in the plurality of grating beams is maintained at a fixed angle, to reflect at least a part of a light spot to the outside of "the incident path and the at least one preset emergent path".

12. The wavelength selective optical switch combination according to claim 10 or 11, comprising a monitoring unit outside the "incident path and the at least one preset emergent path"; wherein
the monitoring unit is configured to obtain optical power of the light spot according to at least the part of the light spot reflected thereto, and adjust, according to the optical power of the light spot, energy of the optical signal in the incident path or energy of the light spot reflected to "the outside of the incident path and the at least one preset emergent path", so that energy of light reflected to and transmitted in the at least one preset emergent path is normal.

13. A communication device, comprising: a wavelength selective optical switch combination according to any one of claims 5 to 11 and a drive control unit, wherein the drive control unit is configured to drive rotation of the MEMs grating beams.

14. The communication device according to claim 13, wherein the communication device is an optical cross connect network device.

15. A method for an optical switch, comprising:
inputting, by at least one incident path, an optical signal in a form of a light beam, wherein the optical signal is a multi-wavelength optical signal or a single-wavelength optical signal;
splitting, according to wavelengths, an optical signal input by the at least one incident path, so as to group the optical signal of a same wavelength into one light beam, wherein a plurality of light beams is formed after the splitting; and
forming a plurality of light spots by the plurality of light beams that is after the splitting and falls on a plurality of MEMs grating beams, wherein one light spot falls on at least two MEMs grating beams, and one grating beam bears a part of one light spot, and rotating at least two MEMs grating beams in the plurality of MEMs grating beams in turn in batches, to reflect at least a part of a light spot to at least one preset emergent path.

16. The method for an optical switch according to claim 15, wherein the "rotating at least two MEMs grating beams in the plurality of MEMs grating beams in turn in batches, to reflect at least a part of a light spot to at least one preset emergent path" comprises: dividing at least two MEMs grating beams in the plurality of MEMs grating beams into at least two batches, and rotating the two batches in turn, to reflect at least one complete light spot or at least one partial light spot, or at least one complete light spot and at least one partial light spot, to at least one preset emergent path.

17. The method for an optical switch according to claim 15, wherein in a case where two or more incident paths exist, optical signals input by each incident path have different wavelengths.

18. The method for an optical switch according to claim 15, wherein the plurality of MEMs grating beams is a comb structure.

19. The method for an optical switch according to claim 15, wherein a working width of the MEMs grating beams is smaller than a diameter of the light spot.

20. The method for an optical switch according to claim 15, wherein in the plurality of MEMs grating beams, each MEMs grating beam has a different working width.

21. The method for an optical switch according to claim 15, wherein the "forming a plurality of light spots by the plurality of light beams that is after the splitting and falls on a plurality of MEMs grating beams, wherein one light spot falls on at least two MEMs grating beams, and one grating beam bears a part of one light spot, and rotating at least two MEMs grating beams in the plurality of MEMs grating beams in turn in batches, to reflect at least a part of a light spot to at least one preset emergent path" comprises: forming a plurality of light spots by the plurality of light beams that is after the splitting and falls on a plurality of MEMs grating beams, wherein one light spot falls on at least two MEMs grating beams, and one grating beam bears a part of one light spot, and rotating at least two MEMs grating beams in the plurality of MEMs grating beams in turn in batches, to reflect at least a part of a light spot to at least one preset emergent path, and to reflect at least a part of a light spot out of "the incident path and the at least one preset emergent path".

22. The method for an optical switch according to claim 15, wherein at least one MEMs grating beam in the plurality of MEMs grating beams is maintained at a fixed angle, to reflect at least a part of a light spot to the outside of "the incident path and the at least one preset emergent path".
